# EUROPEAN PATENT SPECIFICATION

(11) **EP 3 536 719 B1**
(45) Date of publication and mention of the grant of the patent: **12.10.2022**
(21) Application number: 17867432.1
(22) Date of filing: 27.10.2017
(51) Int. Cl.: C08F 220/24, C09K 3/18, C09D 5/08, C09D 133/16

(54) **FLUOROPOLYMER AND RUST PREVENTIVE CONTAINING SAME AS ACTIVE INGREDIENT**
FLUORPOLYMER UND ROSTVERHINDERER DAMIT ALS WIRKSTOFF
FLUOROPOLYMÈRE ET PRODUIT ANTIROUILLE LE CONTENANT EN TANT QUE MATIÈRE ACTIVE

(30) Priority: 01.11.2016 JP 2016214397
(43) Date of publication of application: 11.09.2019
(73) Proprietor: Unimatec Co., Ltd., Tokyo 105-0012 (JP)
(72) Inventor: KIJIMA Tetsushi, Kitaibaraki-shi Ibaraki 319-1544 (JP)
(74) Representative: Adam, Holger
(86) International application number: PCT/JP2017/038934
(87) International publication number: WO 2018/084086

(56) References cited:
- WO-A1-2009/034773
- WO-A1-2009/034773
- WO-A1-2010/101091
- WO-A1-2014/097309
- WO-A1-2016/129362
- JP-A- S60 262 870
- JP-A- 2009 029 902
- JP-A- 2014 079 960
- JP-A- 2014 172 952

## Description

### TECHNICAL FIELD

The present invention relates to a rust inhibitor containing a fluorine-containing polymer as an active ingredient. More specifically, the present invention relates to a fluorine-containing polymer that is a copolymer of a (meth)acrylic acid derivative including a perfluoroalkyl group having 6 or less carbon atoms, which is said to have low bioaccumulation potential, and relates to a rust inhibitor containing the polymer as an active ingredient.

### BACKGROUND ART

Acrylic acid derivatives of perfluoroalkyl group-containing alcohols, for example, CF₃(CF₂)₇CH₂CH₂OCOCH=CH₂, are used in large quantity as synthetic monomers of fluorine-containing copolymers constituting water- and oil-repellent for fiber. Perfluoroalkyl alcohols that are precursors thereof to be acrylated are widely used as, for example, surfactants. (Patent Document 1)

In Patent Document 2, it is described that in a surface-treating agent of a substrate, the appearance of water- and oil-repellency of (meth)acrylate containing a perfluoroalkyl group (Rf) depends on the orientation of the Rf group on a treated film and further described that for the orientation of a Rf group, the presence of melting point in a microcrystal originating in the Rf group (having 8 or more carbon atoms) is required, and, therefore, perfluoroalkyl group-containing (meth)acrylate including a perfluoroalkyl group having 8 or more carbon atoms has been used. In addition, it has been shown that when a perfluoroalkyl group-containing (meth)acrylate including a perfluoroalkyl group having 8 or less carbon atoms is used and no isocyanate monomer is contained, the contribution to water- and oil-repellent properties is insufficient, while it is observed in the case of the perfluoroalkyl group-containing having 8 or more carbon atoms.

On the other hand, perfluorooctanoic acid (PFOA) or perfluoroalkyl group-containing carboxylic acid (PFCA) containing a perfluoroalkyl group having 8 or more carbon atoms, which do not exist in nature, have been recently observed to be present in the air, rivers, and so on. It has been reported that, among these compounds, those having perfluoroalkyl groups including about 8 carbon atoms have high bioaccumulation potential and therefore have an environmental problem. Therefore, it is predicted that the manufacturing and the use of these compounds will become difficult in future.

Here, it is presently suggested that a possibility that among telomer compounds to be used as raw materials of surface-modifying agents such as water- and oil-repellent, compounds including perfluoroalkyl groups having 8 or more carbon atoms are converted into PFCA in the environment. Therefore, it is predicted that manufacturing and the use of these compounds will become difficult in future. On the other hand, though compounds including perfluoroalkyl groups having 6 or less carbon atoms are recognized to have low bioaccumulation potential, the compounds including perfluoroalkyl groups having 6 or less carbon atoms are deemed difficult to achieve performance required for products such as rust inhibitors.

The present applicant has previously proposed that fluorine-containing organic solvent solution, aqueous dispersion or non-fluorine-containing organic solvent dispersion of (A) a fluorine-containing polymer comprising a fluoroalkyl alcohol (meth)acrylic acid derivative represented by the general formula:

CnF₂ₙ+₁(CH₂CF₂)ₐ(CF₂CF₂)_{b}(CH₂CH₂)_{c}OCOCR=CH₂

R: hydrogen atom or methyl group
n: 1 to 6
a: 1 to 4
b: 0 to 3 or 1 to 3
c: 1 to3
containing in 5 to 100 wt.% as a polymerization unit, is effectively used as a surface-modifying agent (Patent Documents 3 to 4).

The present applicant has also proposed that the following fluorine-containing copolymer can be effectively used as a surface-modifying agent (Patent Document 5). Specifically, the fluorine-containing copolymer is obtained by copolymerizing (A) a fluoroalkyl alcohol (meth)acrylic acid derivative represented by the above general formula with (B) at least one of the followings:
a (meth)acrylic acid ester represented by the general formula: CH₂₌CRCOOR³
   R: hydrogen atom or methyl group
   R³: C₁-C₃₀ linear, branched, or alicyclic alkyl group or aralkyl group;
a (meth)acrylic acid ester represented by the general formula: CH₂=CRCOOR⁴Y
   R: hydrogen atom or methyl group
   R⁴: C₁-C₃₀ linear or branched alkylene group
   Y: crosslinkable functional group (hydroxyl group); and
a (meth)acrylic acid ester represented by the general formula:

   CH₂=CRCOO(R⁵O)₁R⁶

   R: hydrogen atom or methyl group
   R⁵: C₁-C₆ linear or branched alkylene group
   R⁶: hydrogen atom, C₁-C₃₀ linear or branched alkyl group, or aromatic group
   1: 1 to 50.

However, fluorine-containing copolymers prepared using perfluoroalkyl (meth)acrylate as a monomer, which are generally used as surface-treating agents, such as mold releasing agents and oil barrier agents, do not always have satisfactory adhesion to substrates, and improvement of their processing durability has been required. Moreover, improvement of their rust preventive properties has also been required.

WO 2016/129362 A1 discloses a rust inhibitor comprising a fluorine-containing copolymer.

### PRIOR ART DOCUMENTS

### PATENT DOCUMENTS

Patent Document 1 : JP-B-63-22237
Patent Document 2 : WO 2004/035708 A1
Patent Document 3 : WO 2009/034773 A1
Patent Document 4 : WO 2010/101091 A1
Patent Document 5 : JP-A-2014-172952

### OUTLINE OF THE INVENTION

### PROBLEM TO BE SOLVED BY THE INVENTION

An object of the present invention is to provide a rust inhibitor comprising a fluorine-containing polymer, the fluorine-containing polymer comprising a copolymer of a polyfluoroalkyl alcohol (meth)acrylic acid derivative containing a perfluoroalkyl group having 6 or less carbon atoms, which is said to have low bioaccumulation potential and functional group-containing polymerizable monomer, and also to provide a rust inhibitor comprising the fluorine-containing copolymer as an active ingredient and having excellent adhesion to substrates as well as improved durability and rust preventive properties.

### MEANS FOR SOLVING THE PROBLEM

According to claim 1, the above object of the present invention can be achieved by the following rust inhibitor comprising a fluorine-containing polymer as an active ingredient. Specifically, the fluorine-containing polymer is a fluorine-containing copolymer which comprises, as copolymer units,
(A) a polyfluoroalkyl alcohol (meth)acrylic acid derivative represented by the general formula:

   CnF₂ₙ₊₁(CH₂CF₂)ₐ(CF₂CF₂)_{b}(CH₂CH₂)_{c}OCOCR=CH₂ [I]

   wherein R is a hydrogen atom or a methyl group, n is an integer of 1 to 6, a is an integer of 1 to 4, b is an integer of 1 to 3, and c is an integer of 1 to 3;
(B) a non-fluorine (meth)acrylic acid ester represented by the general formula:

   CH₂₌CRCOOR³ [III]

   wherein R is a hydrogen atom or a methyl group, and R³ is a C₁-C₃₀ linear, branched, or cyclic hydrocarbon group that may contain an oxygen atom; and
(C) a functional group-containing (meth)acrylic acid or an ester thereof represented by the following general formula:

   CH₂₌CRCOO(H)ₚ(R⁴Y)_{q} [IV]

   wherein R is a hydrogen atom or a methyl group, p and q are 0 or 1, p + q is 1, R⁴ is a C₁-C₃₀ linear, branched, or cyclic hydrocarbon group that may have an oxygen atom, and Y is a phosphate group or an epoxy group;
   wherein the component (C) is copolymerized at a ratio of 0.01 to 5 wt.% in the entire copolymer. Here, the term "(meth)acrylic acid ester" refers to an acrylic acid ester or a methacrylic acid ester.

### EFFECT OF THE INVENTION

The copolymer of a polyfluoroalkyl alcohol (meth)acrylic acid derivative which the rust inhibitor according to the present invention comprises is constituted of a perfluoroalkyl group having 6 or less carbon atoms, which has low bioaccumulation potential, and also readily forms a double bond by the elimination of HF from a CH₂CF₂ group derived from vinylidene fluoride in the molecule, which allows easy decomposition by ozonolysis. Consequently, the polymer hardly hinders the environment and also can be suitably used as an active ingredient of a surface-modifying agent, such as a water- and oil-repellent, an oil barrier or rust inhibitor etc., having performance effective rust preventive properties.

### EMBODIMENTS FOR CARRYING OUT THE INVENTION

Examples of the polyfluoroalkyl alcohol (meth)acrylic acid derivative [I] include the following compounds, as shown in Patent Documents 3 and 4, and their corresponding methacrylic acid derivatives:

| | |
|---|---|
| C₂F₅(CH₂CF₂)(CF₂CF₂)(CH₂CH₂)OCOCH=CH₂ | C₄F₉(CH₂CF₂)(CF₂CF₂)(CH₂CH₂)OCOCH=CH₂ |
| C₂F₅(CH₂CF₂)(CF₂CF₂)(CH₂CH₂)₂OCOCH=CH₂ | C₄F₉(CH₂CF₂)(CF₂CF₂)(CH₂CH₂)₂OCOCH=CH₂ |
| C₂F₅(CH₂CF₂)(CF₂CF₂)₂(CH₂CH₂)OCOCH=CH₂ | C₄F₉(CH₂CF₂)(CF₂CF₂)₂(CH₂CH₂)OCOCH=CH₂ |
| C₂F₅(CH₂CF₂)(CF₂CF₂)₂(CH₂CH₂)₂OCOCH=CH₂ | C₄F₉(CH₂CF₂)(CF₂CF₂)₂(CH₂CH₂)₂OCOCH=CH₂ |
| C₂F₅(CH₂CF₂)(CF₂CF₂)₃(CH₂CH₂)OCOCH=CH₂ | C₄F₉(CH₂CF₂)(CF₂CF₂)₃(CH₂CH₂)OCOCH=CH₂ |
| C₂F₅(CH₂CF₂)(CF₂CF₂)₃(CH₂CH₂)₂OCOCH=CH₂ | C₄F₉(CH₂CF₂)(CF₂CF₂)₃(CH₂CH₂)₂OCOCH=CH₂ |
| C₂F₅(CH₂CF₂)₂(CF₂CF₂)(CH₂CH₂)OCOCH=CH₂ | C₄F₉(CH₂CF₂)₂(CF₂CF₂)(CH₂CH₂)OCOCH=CH₂ |
| C₂F₅(CH₂CF₂)₂(CF₂CF₂)(CH₂CH₂)₂OCOCH=CH₂ | C₄F₉(CH₂CF₂)₂(CF₂CF₂)(CH₂CH₂)₂OCOCH=CH₂ |
| C₂F₅(CH₂CF₂)₂(CF₂CF₂)₂(CH₂CH₂)OCOCH=CH₂ | C₄F₉(CH₂CF₂)₂(CF₂CF₂)₂(CH₂CH₂)OCOCH=CH₂ |
| C₂F₅(CH₂CF₂)₂(CF₂CF₂)₂(CH₂CH₂)₂OCOCH=CH₂ | C₄F₉(CH₂CF₂)₂(CF₂CF₂)₂(CH₂CH₂)₂OCOCH=CH₂ |
| C₂F₅(CH₂CF₂)₂(CF₂CF₂)₃(CH₂CH₂)OCOCH=CH₂ | C₄F₉(CH₂CF₂)₂(CF₂CF₂)₃(CH₂CH₂)OCOCH=CH₂ |
| C₂F₅(CH₂CF₂)₂(CF₂CF₂)₃(CH₂CH₂)₂OCOCH=CH₂ | C₄F₉(CH₂CF₂)₂(CF₂CF₂)₃(CH₂CH₂)₂OCOCH=CH₂ |

In the general formula [I] above, n is an integer of 1 to 6, preferably 3 to 4, a is an integer of 1 to 4, preferably 1 to 3, b is an integer of 1 to 3, preferably 1 to 2, and c is an integer of 1 to 3, preferably 1 to 2, in terms of the polymerization liquid stability during polymerization, solubility, polymerization rate, etc.

The polyfluoroalkyl alcohol (meth)acrylic acid derivative can be used alone as a fluorine-containing polymerizable monomer that is one side of the monomers; however, the derivative can be also used in combination with the other fluorine-containing polymerizable monomer, which is constituted as a part of the derivative, specifically in an amount within a range of about 30 wt.% or less in the total amount of fluorine-containing polymerizable monomers.

As the other polymerizable fluorine-containing monomer, used are those represented by the general formula:

CH₂=CRCOOR¹(NR²SO₂)ₘRf [II]

R: hydrogen atom or methyl group
R¹: alkylene group having 1 to 6 carbon atoms
R₂: lower alkyl group having 1 to 4 carbon atoms
Rf: polyfluoroalkyl group, preferably perfluoroalkyl group, having 1 to 6, preferably 2 to 4 carbon atoms
m: 0 or 1
Examples of them include the following polyfluoroalkyl group-containing (meth)acrylate monomers. However, the number n of the carbon atoms of a terminal polyfluoroalkyl group must be 1 to 6.

CH2=CHCOOCH₂CₙF₂ₙH

CH₂=C(CH₃)COOCH₂CnF₂ₙH

CH₂=CHCOOCH₂CₙF₂ₙ₊₁

CH₂=C(CH₃)COOCH₂CnF₂ₙ₊₁

CH₂=CHCOOC₂H₄CₙF₂ₙ₊₁

CH₂=C(CH₃)COOC₂H₄CₙF₂ₙ₊₁

CH₂=CHCOOC₃H₆CₙF₂ₙ₊₁

CH₂=C(CH₃)COOC₃H₆CₙF₂ₙ₊₁

CH₂=CHCOOC₄H₈CₙF₂ₙ₊₁

CH₂=C(CH₃)COOC₄H₈CₙF₂ₙ₊₁

CH₂=CHCOOC₂H₄[N(CH₃)SO₂]CₙF₂ₙ₊₁

CH₂=C(CH₃)COOC₂H₄[N(CH₃)SO₂]CₙF₂ₙ₊₁

CH₂=CHCOOC₂H₄[N(C₂H₅)SO₂]CₙF₂ₙ₊₁

CH₂=C(CH₃)COOC₂H₄[N(C₂H₅)SO₂]CₙF₂ₙ₊₁

CH₂=CHCOOC₂H₄[N(C₃H₇)SO₂]CₙF₂ₙ₊₁

CH₂=C(CH₃)COOC₂H₄[N(C₃H₇)SO₂]CₙF₂ₙ₊₁

CH₂=CHCOOC₂H₄Cₙ₋₃F₂ₙ₋₆CF(CF₃)₂

CH₂=C(CH₃)COOC₂H₄Cₙ₋₃F₂ₙ₋₆CF(CF₃)₂

The polyfluoroalkyl alcohol (meth)acrylic acid derivative [I] alone or a combination of the polyfluoroalkyl alcohol (meth)acrylic acid derivative [I] and the other fluorine-containing polymerizable monomer [II], and the (meth)acrylic acids or esters thereof [III] and [IV] are copolymerized at a weight ratio of 1 to 99:99 to 1.

As the polymerizable monomers to be copolymerized with the polyfluoroalkyl alcohol (meth)acrylic acid derivative [I] or a combination thereof with the other fluorine-containing polymerizable monomer [II], a non-fluorine (meth)acrylic acid ester represented by the following general formula [III] and a functional group-containing (meth)acrylic acid or an ester thereof represented by the general formula [IV] are used.

CH₂₌CRCOOR³ [III]

CH₂=CRCOO(H)p(R⁴Y)q [IV]

R: H or methyl group
R³: C₁-C₃₀ linear, branched, or cyclic hydrocarbon group that may contain an oxygen atom; preferably an alkyl group
R⁴: C₁-C₃₀ linear, branched, or cyclic hydrocarbon group that may contain an oxygen atom
Y: phosphate group or epoxy group
p, q: 0 or 1, and p + q is 1.

Examples of the non-fluorine polymerizable monomer of the compound [III] include (meth)acrylates esterified with a C₁-C₁₈ linear or branched alkyl group, such as methyl, ethyl, propyl, isopropyl, n-butyl, n-hexyl, 2-ethylhexyl, n-octyl, lauryl, and stearyl, or an alkoxyalkyl group, such as methoxymethyl, 2-methoxyethyl, 2-ethoxyethyl, 2-butoxyethyl, and 3-ethoxypropyl; and (meth)acrylates esterified with a cyclic hydrocarbon group, such as cycloalkyl group (e.g., cyclohexyl), aralkyl group (e.g., benzyl), and chair-type alkyl group (e.g., bornyl group and adamantyl group).

The copolymerization with such a non-fluorine (meth)acrylic acid ester improves adhesion to the substrate, also improve film-forming properties and film strength, and impart excellent water- and oil-repellency. Moreover, rust preventive properties are greatly improved. The copolymerization ratio of the non-fluorine (meth)acrylic acid ester is 1 to 50 wt.%, preferably 5 to 20 wt.%, in the fluorine-containing copolymer.

Examples of the functional group-containing (meth)acrylic acid or an ester thereof of the compound [IV] include (meth)acrylates having a phosphate group, such as 2-(meth)acryloyloxy ethyl acid phosphate; and (meth)acrylates having an epoxy group, such as glycidyl (meth)acrylate, 4-hydroxybutyl (meth)acrylate glycidyl ether, and 3,4-epoxycyclohexylmethyl (meth)acrylate.

Such a functional group-containing (meth)acrylic acid or an ester thereof is copolymerized at a ratio of about 0.01 to 5 wt.%, preferably about 0.1 to 2 wt.%, in the fluorine-containing copolymer. When the functional group-containing (meth)acrylic acid or an ester thereof is copolymerized as an effective component of a water- and oil-repellent fluorine-containing copolymer, the adhesion to the substrate becomes stronger, and an effect of improving the durability of the rust inhibitor can be obtained. Moreover, rust preventive properties are greatly improved. When the amount of functional group-containing (meth)acrylic acid or an ester thereof used is greater than this range, water- and oil-repellency and rust preventive properties are not improved, as shown in the results of Comparative Example 4, provided later.

The solvent used in the polymerization reaction is not particularly limited, as long as it can dissolve the fluorine-containing copolymer. An organic solvent having a fluorine atom is preferably used. The polymerization reaction is performed, for example, in a fluorine-containing organic solvent comprising at least one of 1,4-bis(trifluoromethyl)benzene, 1,1,1,2,2-pentafluoro-3,3-dichloropropane, 1,1,2,2,3-pentafluoro-1,3-dichloropropane, 1,1,1,2,3,4,4,5,5,5-decafluoropentane, perfluorohexane, and hydrofluoroethers, such as Novec 7100 (C₄F₉OCH₃), Novec 7200 (C₄F₉OC₂H₅), and Novec 7300 [C₂F₅CF(OCH₃)C₃F₇], manufactured by 3M.

When the solubility of the functional group-containing (meth)acrylic acid or an ester thereof in the fluorine-containing organic solvent is not good, it is preferable to mix an alcohol therewith. The alcohol is not particularly limited; however, preferable alcohols are those that can dissolve the fluorine-containing copolymer to be obtained, and that are compatible with the fluorine-containing organic solvent, and further compatible with the functional group-containing (meth)acrylic acid or an ester thereof. For example, isopropyl alcohol is used. The mixing ratio of fluorine-containing organic solvent to alcohol is preferably 95:5 to 70:30.

As an initiator used at about 0.1 to 4 wt.%, preferably about 1 to 2 wt.%, based on the total amount of the comonomers, diacyl peroxide, peroxycarbonate or peroxyester is used. Specific examples thereof include organic peroxides, such as isobutyryl peroxide, lauroyl peroxide, stearoyl peroxide, succinic acid peroxide, bis(heptafluorobutyryl) peroxide, pentafluorobutyroyl peroxide, bis(4-tert-butylcyclohexyl) peroxy dicarbonate, di-n-propyl peroxy dicarbonate, and diisopropyl peroxy dicarbonate. Depending on the polymerization reaction, an azo compound, inorganic peroxide, or a redox system thereof can also be used. Depending on the reaction conditions and the composition ratio, the polymerization reaction may hardly progress; in that case, the polymerization initiator may be added again during the polymerization reaction.

Further, a chain transfer agent can be used, if necessary, to adjust the molecular weight. Examples of chain transfer agents include dimethyl ether, methyl t-butyl ether, C₁-C₆ alkanes, methanol, ethanol, 2-propanol, cyclohexane, carbon tetrachloride, chloroform, dichloromethane, methane, ethyl acetate, ethyl malonate, and acetone.

The copolymerization reaction is performed using such a reaction solvent, a reaction initiator, etc., at a reaction temperature of about 0 to 100°C, preferably about 5 to 60°C, particularly preferably about 40 to 50°C. After completion of the reaction, a copolymer solution having a solid matters content of about 5 to 40 wt.% is obtained. The solvent is removed from this reaction mixture, thereby obtaining a fluorine-containing copolymer.

When the remaining unreacted comonomers were analyzed by gas chromatography, it was confirmed that the polyfluoroalkyl alcohol (meth)acrylic acid derivative [I] used in the copolymerization reaction was almost completely copolymerized.

The method for producing a copolymer of the polyfluoroalkyl alcohol (meth)acrylic acid derivative is not limited to the above solution polymerization method, and, for example, suspension polymerization method or emulsion polymerization method using water as the dispersion medium in the presence of a nonionic surfactant and/or a cationic surfactant may be employed.

The thus prepared copolymer of the polyfluoroalkyl alcohol (meth)acrylic acid derivative is isolated by a method of evaporation to dryness or aggregation by adding a flocculant such as an inorganic salt, and purified by washing with e.g. a solvent. The weight average molecular weight Mw of the resulting copolymer is indicated by high-performance liquid chromatography method, and its value is about 2,000 to 2,000,000.

The polymer solution prepared by the solution polymerization method is further diluted with a fluorine-containing organic solvent such as 1,4-bis(trifluoromethyl)benzene or 1,3-bis(trifluoromethyl)benzene, preferably with the same fluorine-containing organic solvent as that used in the polymerization reaction, such that the solid matters content is about 0.01 to 30 wt.%, preferably about 0.05 to 5 wt.%, and is then used as a rust inhibitor. Regarding the polymerization product prepared by aqueous emulsion polymerization method or suspension polymerization method, they can be also prepared using the polymerization product as an aqueous dispersion directly or after diluted with water to a solid matters content of about 0.1 to 10 wt.%, or as an aqueous dispersion or an organic solvent solution by adding a flocculant to the polymerization reaction solution for aggregating the polymerization product and dispersing in water or dissolving in a fluorine-containing organic solvent the copolymer isolated by washing the polymerization product with water or an organic solvent. The aqueous dispersion preferably containing a surfactant and a water soluble organic solvent in a concentration of 20 wt.% or less is used. This aqueous dispersion or organic solvent solution can be also used as, for example, a surface-modifying agent such as a water- and oil-repellent or an oil barrier.

The polymer solution composed of the aqueous dispersion or fluorine-containing organic solvent solution of the copolymer can further contain other additives that are necessary for the surface-modifying agent purpose, for example, a cross-linking agent such as a melamine resin, a urea resin, or a blocked isocyanate; a polymer extender; a silicone resin another water repellent such as an oil, or a wax; an insecticide; an antistatic agent; a dye stabilizer; a crease preventing agent; and a stain blocker.

The surface-treating agent obtained in this manner can be effectively used as a surface-treating agent, particularly a rust inhibitor, such as water- and oil-repellent agents for metal, paper, film, fiber, cloth, fabric, carpet, or textile products made of filament, fiber, yarn, etc.; oil barriers for sliding parts of watches, motors, digital camera lenses, and other precision instruments, or parts adjacent to such sliding parts, for preventing leakage of lubricating oil from the sliding surface to its surrounding area; waterproof and dampproof agents for automobile parts and electronic components, such as printed circuit boards and semiconductors; and rust inhibitors for on-vehicle parts. As the application method, brushing, spraying, dipping, spin coating, dispenser coating, padding, roll coating, or a combination of these methods is generally used. Drying is generally performed at room temperature to 200°C for about 5 seconds to 24 hours, although it depends on the type of material to be processed. Then, surface treatment is completed.

### EXAMPLES

The following describes the present invention with reference to Examples.

### Synthesis Example 1

(1) In a 1200-mL autoclave equipped with a stirrer and a thermometer, 529 g (0.86 mol) of

   CF₃(CF₂)₃(CH₂CF₂)(CF₂CF₂)₂I (99.9GC%)

   and 5 g of di-tertiary butyl peroxide were charged, and the autoclave was deaerated with a vacuum pump. When the inner temperature was increased to 80°C, ethylene was sequentially introduced into the autoclave to adjust the inner pressure to 0.5 MPa. When the inner pressure was decreased to 0.2 MPa, ethylene was introduced again to increase the inner pressure to 0.5 MPa. This process was repeated to introduce 34 g (1.2 mol) of ethylene over about 3 hours, while maintaining the inner temperature at 80 to 115°C. The content was collected at an inner temperature of 50°C or lower to obtain 550 g (yield: 99.4%) of

   CF₃(CF₂)₃(CH₂CF₂)(CF₂CF₂)₂(CH₂CH₂)I (99.1GC%).
(2) In a 200-mL three-necked flask equipped with a condenser and a thermometer, 150 g (0.24 mol) of

   CF₃(CF₂)₃(CH₂CF₂)(CF₂CF₂)₂(CH₂CH₂)I (99.1GC%)

   prepared in the above (1) and 105 g (1.78 mol) of N-methyl formamide were charged, followed by stirring at 150°C for 5 hours. After the completion of the reaction, the reaction mixture was washed with 40 mL of water. The lower layer (132.3 g) was mixed with 135 g of a 15 wt.% p-toluenesulfonic acid aqueous solution, followed by stirring at 80°C for 7 hours. The reaction mixture was left standing, and then 103 g (yield: 53.5%) of a reaction product (65.5GC%), being a white solid, was obtained as the lower layer.

The reaction product was subjected to reduced pressure distillation under conditions of an inner pressure of 0.2 kPa, an inner temperature of 121 to 163°C, and a column top temperature of 76 to 77°C to obtain 66.9 g (distillation yield: 94.2%) of a purified reaction product (95.3GC%).

The resulting purified reaction product was confirmed by the results of ¹H-NMR and ¹⁹F-NMR to be the compound represented by the following formula:

CF₃(CF₂)₃(CH₂CF₂)(CF₂CF₂)₂(CH₂CH₂)OH

(3) 60.0g (0.11 mol) of the reaction product (95.4GC%) prepared in the above (2), 29 g of toluene, 1.6 g of p-toluenesulfonic acid, and 0.07 g of hydroquinone were charged in a 100-mL three-necked flask equipped with a condenser and a thermometer. After the inner temperature was increased to 100°C, 10 g (0.14 mol) of acrylic acid was added in the flask, followed by stirring at an inner temperature of 118°C for 3 hours. After the completion of the reaction, 82 g of the reaction solution was collected after being cooled. Toluene was removed with an evaporator, and 63.9 g of the residue was washed with tap water to obtain 60.8 g (yield: 86.4%) of a reaction product (89.3GC%), being a transparent, colorless liquid at ordinary temperature, was obtained as the lower layer.

The reaction product was subjected to reduced pressure distillation under conditions of an inner pressure of 0.2 kPa, an inner temperature of 125 to 155°C, and a column top temperature of 84 to 86°C to obtain 42.2 g (distillation yield: 77.2%) of a purified reaction product (99.4GC%).

The resulting purified reaction product was confirmed by the results of ¹H-NMR and ¹⁹F-NMR to be the compound represented by the following formula:

CF₃(CF₂)₃(CH₂CF₂)(CF₂CF₂)₂(CH₂CH₂)OCOCH=CH₂ [fluorine-containing monomer A]

### Synthesis Example 2

60.0g (0.11 mol) of the reaction product (95.4GC%) prepared in the Synthesis Example 1 (2), 29 g of toluene, 1.6 g of p-toluenesulfonic acid, and 0.07 g of hydroquinone were charged in a 100-mL three-necked flask equipped with a condenser and a thermometer. After the inner temperature was increased to 100°C, 12 g (0.14 mol) of methacrylic acid was added in the flask, followed by stirring at an inner temperature of 118°C for 3 hours. After the completion of the reaction, 82 g of the reaction solution was collected after being cooled. Toluene was removed with an evaporator, and 64 g of the residue was washed with tap water to obtain 60.8 g (yield: 86 %) of a reaction product (89 GC%), being a transparent, colorless liquid at room temperature, was obtained as the lower layer.

The reaction product was subjected to reduced pressure distillation under conditions of an inner pressure of 0.2 kPa, an inner temperature of 125 to 155°C, and a column top temperature of 84 to 86°C to obtain 42.2 g (distillation yield: 77.2%) of a purified reaction product (99.4GC%).

The resulting purified reaction product was confirmed by the results of ¹H-NMR and ¹⁹F-NMR to be the compound represented by the following formula:

CF₃(CF₂)₃(CH₂CF₂)(CF₂CF₂)₂(CH₂CH₂)OCOC(CH₃)=CH₂ [fluorine-containing monomer B]

### Example 1

| | |
|---|---|
| Fluorine-containing monomer A obtained in the Synthesis Example 1 | 46.4 g |
| n-Stearyl methacrylate [StMA] | 10.0 g |
| 2-Acryloyloxyethylacidphosphate [P-1A] (Light Acrylate P-1A(N), produced by Kyoeisha Chemical Co., Ltd.) | 0.2 g |
| 1,3-Bis(trifluoromethyl)benzene [MTF-TFM] | 193.0g |
| Isopropyl alcohol [IPA] | 50.0g |

The above components were charged in a 500-ml reactor equipped with a condenser and the air in the reactor was replaced with nitrogen gas for 30 minutes. Further, the following component was added to the reactor (total amount: 300.0 g).

| | |
|---|---|
| Bis(4-tert-butylcyclohexyl) peroxy dicarbonate [P-16] | 0.8g |

Then, the temperature in the reactor was gradually raised to 50°C. While stirring the mixture, a polymerization reaction was performed at this temperature for 21 hours.

After completion of the reaction, the reaction product was cooled, thereby obtaining a polymer solution having a solid matters content of 19.1 wt.%. When the unreacted residual comonomer was analyzed by gas chromatography, it was confirmed that 99% of the fluorine-containing monomer A used in the copolymerization reaction was copolymerized.

The obtained copolymer solution was placed in a 120°C oven, and the solvent was removed to isolate a fluorine-containing monomer A/n-stearyl methacrylate/2-acryloyloxyethylacidphosphate copolymer, which had a weight-average molecular weight (Mw) of 123,000. Here, Mw was measured by a GPC measuring method using Shodex GPC KD 806M + KD-802 + KD-G at a temperature of 40°C with an eluate of a 10 mM tetrahydrofuran solution at an elution rate of 1 ml/min. The detector used was a differential refractometer, and the analysis was performed by Labchart 180 (polystyrene conversion) produced by SIC.

By adding 1,3-bis(trifluoromethyl)benzene to the copolymer solution, the solution was diluted to a solid matters content of 2 wt.%, and 1 ml of the diluted solution was dropped and spin-coated on each of aluminum plates or copper plates (2 × 5 cm), and dried at 120°C for 30 minutes, thereby producing test pieces.

Using the produced test pieces, measurement of static contact angles in accordance with Sessile Drop Method, which is one index of water- and oil-repellency, was conducted with water and n-hexadecane. Measurements were performed before and after cleaning of the test pieces with a 1,3-bis(trifluoromethyl)benzene solvent.

### Examples 2 to 7

In Example 1, the copolymerization monomer was changed in various ways.

Table 1 below shows the copolymerization monomers (unit: g), the solid matters content of the polymer solutions (unit: wt.%), the measurement results of Mw of copolymer, and static contact angle (unit: degree). Table 1 also shows the results of Example 1.

**Table 1**

| Example | | | 1 | 2 | 3 | 4 | 5 | 6 | 7 |
|---|---|---|---|---|---|---|---|---|---|
| Fluorine-containing monomer | | | | | | | | | |
| | A | | 46.4 | 46.4 | 46.4 | 46.4 | 46.4 | 46.4 | |
| | B | | | | | | | | 46.4 |
| Non-fluorine monomer | | | | | | | | | |
| | StMA | | 10.0 | | | | 10.0 | | |
| | BzMA | | | 10.0 | | | | | 10.0 |
| | IBMA | | | | 10.0 | | | | |
| | MMA | | | | | 10.0 | | 10.0 | |
| Functional group-containing monomer | | | | | | | | | |
| | P-1A | | 0.2 | 0.2 | 0.2 | 0.2 | 0.5 | 1.2 | 0.2 |
| Solid matters content (wt.%) | | | 19.1 | 19.1 | 19.1 | 19.1 | 19.2 | 19.4 | 19.1 |
| Mw of Copolymer | | | 123,000 | 152,000 | 116,000 | 196,000 | 124,000 | 114,000 | 179,000 |
| Contact angle with water (° ) | | | | | | | | | |
| | A1 | before cleaning | 116 | 118 | 117 | 119 | 119 | 118 | 118 |
| | | after cleaning | 112 | 111 | 113 | 116 | 112 | 111 | 112 |
| | Cu | before cleaning | 119 | 119 | 117 | 116 | 118 | 118 | 118 |
| | | after cleaning | 110 | 113 | 111 | 112 | 110 | 112 | 112 |
| Contact angle with C₁₆H₃₄ (° ) | | | | | | | | | |
| | Al | before cleaning | 77 | 78 | 76 | 78 | 77 | 78 | 77 |
| | | after cleaning | 74 | 75 | 72 | 72 | 74 | 72 | 73 |
| | Cu | before cleaning | 77 | 77 | 76 | 76 | 78 | 77 | 76 |
| | | after cleaning | 70 | 73 | 71 | 72 | 74 | 72 | 71 |

| | | | | | | | | | |
|---|---|---|---|---|---|---|---|---|---|
| Note) BzMA : Benzyl methacrylate IBMA : Isobornyl methacrylate MMA : Methyl methacrylate | | | | | | | | | |

### Examples 8 to 14

In Example 1, the copolymerization monomer, solvent or polymerization initiator were changed in various ways.

Table 2 below shows the copolymerization monomers (unit: g), the solid matters content of the polymer solutions (unit: wt.%), the measurement results of Mw of copolymer, and static contact angle (unit: degree). IPA, which was one of the solvents, was not used.

**Table 2**

| Example | | 8 | 9 | 10 | 11 | 12 | 13 | 14 | |
|---|---|---|---|---|---|---|---|---|---|
| Fluorine-containing monomer | | | | | | | | | |
| | A | 77.3 | 74.7 | 74.7 | 131.0 | 131.0 | 131.0 | 131.0 | |
| Non-fluorine monomer | | | | | | | | | |
| | StMA | 16.9 | | | | | | | |
| | BzMA | | 18.9 | | 18.8 | | | | |
| | IBMA | | | 18.9 | | | | | |
| | MMA | | | | | 18.8 | 18.8 | 18.8 | |
| Functional group-containing monomer | | | | | | | | | |
| | MAA | 0.2 | 0.4 | 0.4 | 0.7 | 0.7 | 1.4 | 2.8 | |
| Solvent | | | | | | | | | |
| | MTF-TFM | 404.6 | 404.6 | 404.6 | 297.5 | 297.5 | 297.5 | 297.5 | |
| Polymerization initiator | | | | | | | | | |
| | P-16 | | 1.3 | 1.3 | 1.3 | 2.1 | 2.1 | 2.1 | 2.1 |
| Solid matters content (wt.%) | | | 19.1 | 19.1 | 19.1 | 33.9 | 33.9 | 34.0 | 34.2 |
| Mw of Copolymer | | | 206,00 0 | 228,000 | 198,000 | 295,000 | 298,000 | 287,000 | 268,000 |
| Contact angle with water (° ) | | | | | | | | | |
| | A1 | before cleaning | 117 | 116 | 119 | 119 | 118 | 118 | 116 |
| | | after cleaning | 115 | 114 | 113 | 116 | 113 | 112 | 114 |
| | Cu | before cleaning | 119 | 118 | 117 | 117 | 116 | 118 | 117 |
| | | aftercleaning | 113 | 114 | 115 | 112 | 114 | 115 | 113 |
| Contact angle with C₁₆H₃₄ (° ) | | | | | | | | | |
| | A1 | before cleaning | 76 | 77 | 76 | 79 | 77 | 78 | 77 |
| | | after cleaning | 71 | 75 | 71 | 74 | 74 | 76 | 74 |
| | Cu | before cleaning | 78 | 77 | 75 | 78 | 78 | 77 | 77 |
| | | after cleaning | 75 | 72 | 72 | 73 | 75 | 73 | 72 |

| | | | | | | | | | |
|---|---|---|---|---|---|---|---|---|---|
| Note) MAA : Methacrylic acid | | | | | | | | | |

### Examples 15 to 19

In Example 2, the functional group-containing monomer, solvent or polymerization initiator were changed in various ways.

Table 3 below shows the copolymerization monomers (unit: g), the solid matters content of the polymer solutions (unit: wt.%), the measurement results of Mw of copolymer, and static contact angle (unit: degree).

**Table 3**

| Example | | | 15 | 16 | 17 | 18 | 19 |
|---|---|---|---|---|---|---|---|
| Functional group-containing monomer | | | | | | | |
| | P-1A | | 0.2 | 0.2 | 0.2 | 0.2 | |
| | GMA | | | | | | 0.2 |
| Solvent | | | | | | | |
| | MTF-TFM | | 193.0 | 193.0 | 96.5 | 96.5 | 243.0 |
| | Novec7100 | | | | 96.5 | | |
| | Novec7200 | | | | | 96.5 | |
| | IPA | | 50.0 | 50.0 | 50.0 | 50.0 | |
| Polymerization initiator | | | | | | | |
| | P-16 | | | | 0.8 | 0.8 | 0.8 |
| | AIBN | | 0.8 | | | | |
| | V-65 | | | 1.3 | | | |
| Solid matters content (wt.%) | | | 19.1 | 19.2 | 19.1 | 19.1 | 19.1 |
| Mw of Copolymer | | | 182,000 | 165,000 | 130,000 | 145,000 | 176,000 |
| Contact angle with water (° ) | | | | | | | |
| | A1 | before cleaning | 118 | 117 | 118 | 118 | 119 |
| | | after cleaning | 116 | 116 | 116 | 115 | 114 |
| | Cu | before cleaning | 116 | 119 | 118 | 117 | 118 |
| | | after cleaning | 114 | 115 | 116 | 113 | 113 |

| | | | | | | | |
|---|---|---|---|---|---|---|---|
| Note) GMA: glycidyl methacrylate (produced by Tokyo Chemical Industry Co., Ltd.) Novec7100: produced by 3M Co., Ltd. (Methyl nonafluorobutyl ether-methyl nonafluoroisobutyl ether mixture Novec7200: produced by 3M Co., Ltd. (Ethyl nonafluorobutyl ether-ethyl nonafluoroisobutyl ether mixture AIBN: azobisisobutyronitrile V-65:2,2'-azobis(2,4-dimethylvaleronitrile) | | | | | | | |

### Comparative Examples 1 to 4

The following fluorine-containing monomers, non-fluorine monomers, functional group-containing monomer, solvent, and polymerization initiator were used.

Table 4 below shows the copolymerization monomers (unit: g), the solid matters content of the polymer solutions (unit: wt.%), the measurement results of Mw of copolymer, and static contact angle (unit: degree).

**Table 4**

| Comparative Example | | 1 | 2 | 3 | 4 | |
|---|---|---|---|---|---|---|
| Fluorine-containing monomer | | | | | | |
| | A | | | 51.0 | 43.4 | |
| | FAAC-8 | 74.9 | 84.8 | | | |
| Non-fluorine monomer | | | | | | |
| | StMA | 8.8 | | | | |
| | BzMA | | 9.5 | 6.0 | 5.1 | |
| Functional group-containing monomer | | | | | | |
| | P-1A | | | | 8.5 | |
| Solvent | | | | | | |
| | MTF-TFM | 413.0 | 404.0 | 243.0 | 243.0 | |
| Polymerization initiator | | | | | | |
| | P-16 | | 3.0 | 1.3 | 1.5 | 1.5 |
| Solid matters content (wt.%) | | | 17.4 | 19.1 | 19.4 | 19.4 |
| Mw of Copolymer | | | 130,000 | 163,000 | 196,000 | 56,000 |
| Contact angle with water (° ) | | | | | | |
| | A1 | before cleaning | 119 | 120 | 118 | 108 |
| | | after cleaning | 104 | 103 | 101 | 100 |
| | Cu | before cleaning | 118 | 119 | 118 | 106 |
| | | after cleaning | 101 | 100 | 102 | 104 |
| Contact angle with C₁₆H₃₄ (° ) | | | | | | |
| | A1 | before cleaning | 73 | 74 | 76 | 77 |
| | | after cleaning | 31 | 30 | 30 | 68 |
| | Cu | before cleaning | 75 | 76 | 77 | 73 |
| | | after cleaning | 31 | 32 | 30 | 65 |

| | | | | | | |
|---|---|---|---|---|---|---|
| Note) FAAC-8:2-(perfluorooctyl)ethyl acrylate | | | | | | |

### Examples 20 to 24 and Comparative Example 5

Rust preventive properties were evaluated using 1,3-bis(trifluoromethyl)benzene solutions (component concentration: 5 wt.%) of the fluorine-containing copolymers obtained in Examples 2, 4, 9, 11 and 12, and Comparative Example 3 (isopropyl alcohol was contained in Examples 2 and 4).

The rust preventive properties were evaluated by the methods of salt spray testing (JIS Z 2371). The substrate used was an aluminum, copper, or SPCC substrate (70 × 150 × 1.0 mm). Each substrate was dipped in a 1,3-bis(trifluoromethyl)benzene solution of each fluorine-containing copolymer to perform surface treatment of the substrate. The appearance of each substrate 240 hours after salt spray was evaluated on a four level scale: ⊚ (no rust occurred), ○ (rust partially occurred), △ (rust occurred over half or more of the surface), and × (rust occurred over the entire surface). Table 5 below shows the obtained results.

**Table 5**

| Example | | Ex. 20 | Ex. 21 | Ex. 22 | Ex. 23 | Ex. 24 | Comp. Ex. 5 |
|---|---|---|---|---|---|---|---|
| Coating solution | | Ex. 2 | Ex. 4 | Ex. 9 | Ex. 11 | Ex. 12 | Comp. Ex. 3 |
| Results of salt spray testing | | | | | | | |
| | A1 substrate | O | ⊚ | ⊚ | ⊚ | ⊚ | O |
| | Cu substrate | O | O | ⊚ | ⊚ | ⊚ | O |
| | SPCC substrate | △ | △ | O | O | O | × |

## Claims

1. A rust inhibitor comprising a fluorine-containing polymer as an active ingredient, wherein the fluorine-containing polymer is a copolymer which comprises, as copolymer units,
(A) a polyfluoroalkyl alcohol (meth)acrylic acid derivative represented by the general formula:
CₙF₂ₙ₊₁(CH₂CF₂)ₐ(CF2CF₂)_{b}(CH₂CH₂)_{c}OCOCR=CH₂ [I]
wherein R is a hydrogen atom or a methyl group, n is an integer of 1 to 6, a is an integer of 1 to 4, b is an integer of 1 to 3, and c is an integer of 1 to 3;
(B) a non-fluorine (meth)acrylic acid ester represented by the general formula:
CH₂₌CRCOOR³ [III]
wherein R is a hydrogen atom or a methyl group, and R³ is a C₁-C₃₀ linear, branched, or cyclic hydrocarbon group that may contain an oxygen atom; and
(C) a functional group-containing (meth)acrylic acid or an ester thereof represented by the following general formula:
CH₂₌CRCOO(H)ₚ(R⁴Y)_{q} [IV]
wherein R is a hydrogen atom or a methyl group, p and q are 0 or 1, p + q is 1, R⁴ is a C₁-C₃₀ linear, branched, or cyclic hydrocarbon group that may have an oxygen atom, and Y is a phosphate group or an epoxy group;
wherein the component (B) is copolymerized at a ratio of 1 to 50 wt.% and the component (C) is copolymerized at a ratio of 0.01 to 5 wt.% in the entire copolymer.

2. A rust inhibitor comprising the fluorine-containing polymer as an active ingredient according to claim 1, which is further copolymerized with a fluorine-containing polymerizable monomer represented by the general formula:
CH₂=CRCOOR¹ (NR²SO₂)ₘRf [II]
wherein R is a hydrogen atom or a methyl group, R¹ is a linear or branched alkylene group having 1 to 6 carbon atoms, R² is a lower alkyl group having 1 to 4 carbon atoms, Rf is a perfluoroalkyl group having 1 to 6 carbon atoms, and m is 0 or 1.

3. The rust inhibitor comprising the fluorine-containing polymer as an active ingredient according to claim 1, wherein the polyfluoroalkyl alcohol (meth)acrylic acid derivative [I] or a combination thereof with the other fluorine-containing polymerizable monomer [II], and the (meth)acrylic acids or esters thereof [III] and [IV] are copolymerized at a weight ratio of 1 to 99:99 to 1.

4. The rust inhibitor comprising the fluorine-containing polymer as an active ingredient according to claim 1, wherein the polymer has a weight-average molecular weight (Mw) of 2,000 to 2,000,000, as determined in accordance with the description.

5. The rust inhibitor according to Claim 1, which is prepared as an organic solvent solution.

6. The rust inhibitor according to Claim 5, which is prepared as a fluorine-containing organic solvent solution.

7. Use of the rust inhibitor according to Claim 1, 2 or 3 as a water- and oil-repellent.

## Patentansprüche

1. Rostschutzmittel, das ein fluorhaltiges Polymer als Wirkstoff umfasst, wobei das fluorhaltige Polymer ein Copolymer ist, das als Copolymereinheiten umfasst:
(A) ein Polyfluoralkylalkohol(meth)acrylsäurederivat der allgemeinen Formel:
CₙF₂ₙ₊₁(CH₂CF₂)ₐ(CF₂CF₂)_{b}(CH₂CH₂)_{c}OCOCR=CH₂ [I]
worin R ein Wasserstoffatom oder eine Methylgruppe ist, n eine ganze Zahl von 1 bis 6 ist, a eine ganze Zahl von 1 bis 4 ist, b eine ganze Zahl von 1 bis 3 ist und c eine ganze Zahl von 1 bis 3 ist;
(B) einen nicht fluorierten (Meth)acrylsäureester der allgemeinen Formel:
CH₂₌CRCOOR³ [III]
worin R ein Wasserstoffatom oder eine Methylgruppe ist und R³ eine lineare, verzweigte oder zyklische C₁-C₃₀-Kohlenwasserstoffgruppe ist, die ein Sauerstoffatom enthalten kann; und
(C) eine funktionelle Gruppe enthaltende (Meth)acrylsäure oder ein Ester davon, dargestellt durch die folgende allgemeine Formel:
CH₂=CRCOO(H)ₚ(R⁴Y)_{q} [IV]
worin R ein Wasserstoffatom oder eine Methylgruppe ist, p und q 0 oder 1 sind, p + q 1 ist, R⁴ eine lineare, verzweigte oder zyklische C₁-C₃₀ Kohlenwasserstoffgruppe ist, die ein Sauerstoffatom haben kann, und Y eine Phosphatgruppe oder eine Epoxygruppe ist;
wobei die Komponente (B) in einem Verhältnis von 1 bis 50 Gew.-% und die Komponente (C) in einem Verhältnis von 0,01 bis 5 Gew.-% im gesamten Copolymer copolymerisiert ist.

2. Rostschutzmittel, umfassend das fluorhaltige Polymer als Wirkstoff nach Anspruch 1, das ferner mit einem fluorhaltigen polymerisierbaren Monomer, dargestellt durch die folgende allgemeine Formel, copolymerisiert ist:
CH₂=CRCOOR¹(NR²SO₂)ₘRf [II]
worin R ein Wasserstoffatom oder eine Methylgruppe ist, R¹ eine lineare oder verzweigte Alkylengruppe mit 1 bis 6 Kohlenstoffatomen ist, R² eine Niederalkylgruppe mit 1 bis 4 Kohlenstoffatomen ist, Rf eine Perfluoralkylgruppe mit 1 bis 6 Kohlenstoffatomen ist und m 0 oder 1 ist.

3. Rostschutzmittel, umfassend das fluorhaltige Polymer als Wirkstoff nach Anspruch 1, wobei das Polyfluoralkylalkohol(meth)acrylsäurederivat [I] oder eine Kombination davon mit dem anderen fluorhaltigen polymerisierbaren Monomer [II] und den (Meth)acrylsäuren oder Estern davon [III] und [IV] in einem Gewichtsverhältnis von 1 bis 99:99 bis 1 copolymerisiert sind.

4. Rostschutzmittel, umfassend das fluorhaltige Polymer als Wirkstoff nach Anspruch 1, wobei das Polymer ein gewichtsmittleres Molekulargewicht (Mw) von 2.000 bis 2.000.000, bestimmt gemäß der Beschreibung, aufweist.

5. Rostschutzmittel nach Anspruch 1, das als Lösung in einem organischen Lösungsmittel hergestellt wird.

6. Rostschutzmittel nach Anspruch 5, das als fluorhaltige organische Lösungsmittel-Lösung hergestellt wird.

7. Verwendung des Rostschutzmittels nach Anspruch 1, 2 oder 3 als wasser- und ölabweisendes Mittel.

## Revendications

1. Inhibiteur de rouille comprenant un polymère contenant du fluor en tant qu'ingrédient actif, dans lequel le polymère contenant du fluor est un copolymère qui comprend, en tant qu'unités copolymères,
(A) un dérivé d'acide (méth)acrylique d'alcool polyfluoroalkylique représenté par la formule générale :
CₙF₂ₙ₊₁(CH₂CF₂)ₐ(CF₂CF₂)_{b}(CH₂CH₂)_{c}OCOCR=CH₂ [I]
dans laquelle R est un atome d'hydrogène ou un groupe méthyle, n est un nombre entier de 1 à 6, a est un nombre entier de 1 à 4, b est un nombre entier de 1 à 3, et c est un nombre entier de 1 à 3 ;
(B) un ester d'acide (méth)acrylique non fluoré représenté par la formule générale :
CH₂₌CRCOOR³ [III]
où R est un atome d'hydrogène ou un groupe méthyle, et R³ est un groupe hydrocarboné linéaire, ramifié ou cyclique C₁-C₃₀ qui peut contenir un atome d'oxygène ; et
(C) un acide (méth)acrylique contenant un groupe fonctionnel ou un ester de celui-ci représenté par la formule générale suivante :
CH₂=CRCOO(H)ₚ(R⁴Y)_{q} [IV]
où R est un atome d'hydrogène ou un groupe méthyle, p et q sont 0 ou 1, p + q est 1, R⁴ est un groupe hydrocarboné linéaire, ramifié ou cyclique C₁-C₃₀ qui peut avoir un atome d'oxygène, et Y est un groupe phosphate ou un groupe époxy ;
dans lequel le composant (B) est copolymérisé à un rapport de 1 à 50 % en poids et le composant (C) est copolymérisé à un rapport de 0,01 à 5 % en poids dans le copolymère entier.

2. Inhibiteur de rouille comprenant le polymère contenant du fluor comme ingrédient actif selon la revendication 1, qui est en outre copolymérisé avec un monomère polymérisable contenant du fluor représenté par la formule générale :
CH₂=CRCOOR¹(NR²SO₂)ₘRf [II]
où R est un atome d'hydrogène ou un groupe méthyle, R¹ est un groupe alkylène linéaire ou ramifié ayant 1 à 6 atomes de carbone, R² est un groupe alkyle inférieur ayant 1 à 4 atomes de carbone, Rf est un groupe perfluoroalkyle ayant 1 à 6 atomes de carbone, et m est 0 ou 1.

3. Inhibiteur de rouille comprenant le polymère contenant du fluor comme ingrédient actif selon la revendication 1, dans lequel le dérivé d'acide (méth)acrylique d'alcool polyfluoroalkylique [I] ou une combinaison de celui-ci avec l'autre monomère polymérisable contenant du fluor [II], et les acides (méth)acryliques ou leurs esters [III] et [IV] sont copolymérisés à un rapport en poids de 1 à 99:99 à 1.

4. Inhibiteur de rouille comprenant le polymère contenant du fluor comme ingrédient actif selon la revendication 1, dans lequel le polymère a un poids moléculaire moyen en poids (Mw) de 2 000 à 2 000 000, tel que déterminé conformément à la description.

5. Inhibiteur de rouille selon la revendication 1, qui est préparé sous forme d'une solution de solvant organique.

6. Inhibiteur de rouille selon la revendication 5, qui est préparé comme une solution de solvant organique contenant du fluor.

7. Utilisation de l'inhibiteur de rouille selon la revendication 1, 2 ou 3 comme hydrofuge et oléofuge.
